# EUROPEAN PATENT APPLICATION

(11) **EP 2 000 665 A2**
(43) Date of publication of application: **10.12.2008**
(21) Application number: 07730409.5
(22) Date of filing: 28.03.2007
(51) Int. Cl.: F03D 7/00

(54) **ANTI-NOISE WIND-POWERED GENERATOR**

(30) Priority: 29.03.2006 ES 200600816
(71) Applicant: Gamesa Innovation & Technology, S.L., 31013 Pamplona, Navarra (ES)
(72) Inventor: MATESANZ GIL, Álvaro, 31013 Pamplona (ES)
(86) International application number: PCT/ES2007/000168
(87) International publication number: WO 2007/110459

(57) **Abstract**

Anti-noise wind turbine. A wind turbine (11) which comprises a blade rotor which activates an electric generator and control mechanisms for said rotor in which the blades (13) include mechanisms which allow the reduction of its lift on a length, measured from its tip, less than or equal to its radius R and said control mechanisms allow said lift reduction mechanisms to be activated cyclically during the passing of each blade through a circular sector S less than or equal to 160°. The invention also refers to an operation method for said wind turbine with which said lift reduction mechanisms are cyclically operated during the passing of each blade through a circular sector S delimited between two hypothetical radii located, following the direction of the blades, at 10 and 170° from the hypothetical radius at which a blade (13) reaches maximum height.

## Description

### FIELD OF THE INVENTION

This invention refers to a wind turbine with a blade rotor with mechanisms for reducing aerodynamic noises produced during the rotation of rotor by the effects of wind power.

### BACKGROUND OF THE INVENTION

Wind turbines are an important source of noise. Their blades produce aerodynamic noise due to the interaction of the boundary layer with the trailing edge of the blade.

Previously techniques have proposed to reduce said noise by equipping the trailing edge of rotor blade with a tooted element.

Patent EP0652367 proposes different types of toothed edges for rotor blades.

Patent EP1314885 proposes rotor blades with tooth shaped panels on the trailing edge.

Patent EP1338793 proposes blades with toothed edges, varying the length of the teeth and the distance between them along the length of the blade.

These solutions have reliability problems preventing the ability to guarantee compliance with the standards which regulate the maximum noise levels of wind turbines with only one of these solutions.

Previous techniques have also proposed the reduction of aerodynamic noise of wind turbines by using methods for the control of wind turbine operation and, in particular, rotor speed control. In this regard, the publication "Wind Turbine Noise", Wagner et al., Springer-Verlag Berlin Heidelberg 1996 details the problems posed by the noise generated by wind turbines and some proposals to reduce it.

The issue with these proposals is that, at least in general terms, the reduction of the noise produced involves a reduction of the wind turbine production.

This invention provides a different solution for reducing the noise produced by wind turbines.

### SUMMARY OF THE INVENTION

Firstly, this invention provides a wind turbine which comprises a blade rotor which activates an electric generator and control mechanisms for said rotor, with the blades having an aerodynamic profile with leading edge and trailing edge and mechanisms which allow the reduction of lift on a length L, measured from its tip, less than or equal to the blade radius R, allowing said control mechanisms to cyclically activate the mechanisms for reducing the lift of each blade during its pass through a circular sector S less than or equal to 160° hypothetically situated on the rotor plane. These mechanisms are useful for reducing the noise produced by the wind turbine.

Secondly, this invention provides an operation method for the wind turbine whereby said mechanisms for lift reduction on each blade are cyclically activated during their pass through a circular sector S less than or equal to the sector delimited on the rotor plane between two hypothetical radii located, following the direction of the blade rotation, at 10 and 170° from the hypothetical radius at which the blade reaches maximum height. Thereby achieving noise reduction precisely in the area which reaches the highest volume.

The basic objective of the present invention is to maximise production whilst maintaining noise emissions within the limits established by local, autonomic and national standards.

Other characteristics and advantages of the present invention shall are apparent in the detailed description which follows in relation to the accompanying drawings.

### DESCRIPTION OF DRAWINGS

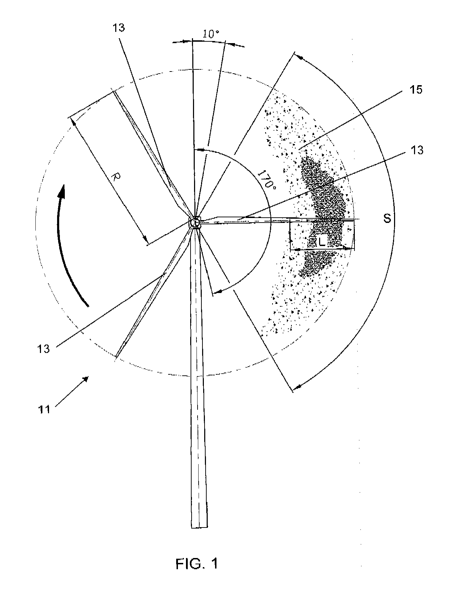

Figure 1 shows a perspective view of a wind turbine according to this invention.

### DETAILED DESCRIPTION OF THE INVENTION

The wind turbine 11 according to this invention comprises a rotor with at least one blade 13 of aerodynamic profile with a leading edge and a trailing edge which incorporates as cyclic pass control system which allows the azimuthal distribution of the lift of each blade 13 on its radius R or on only a part of it of length L to the tip which can be carried out by various mechanisms which we will see below.

With a wind turbine of these characteristics, noise emissions can be efficiently limited as according to the measurements performed in the Sirocco project, the noise caused by a wind turbine 11 is basically generated in an area 15 located in the circular sector S delimited on the rotor plane between two hypothetical radii located, following the direction of blade rotation, at 10 and 170° from the hypothetical radius at which the blade reaches maximum height, therefore an operation method can be implemented which limits noise emissions by reducing the lift of the blades only in this region and particularly in a sector S of 120° where the level of noise emissions is higher.

As can be seen in Figure 1, the area 15 is located at the end of the blade and therefore the reduction of the blade left can be limited to this area.

Apparently, the generation of noise in said area 15 is produced at any blade rotation speed, therefore said controls could be used even when the noise reduction required were such that it demands the rotor speed to be reduced, this therefore allows an increase in production in relation to noise control methods known in the technique.

In turn, the arrangement mechanisms which allow the lift of the blade 13 to be reduced along only part of the blade also contributes to minimising production losses caused by the need to reduce noise emissions as only the operational characteristics of part of the blade are changed, which in a preferred embodiment is estimated to be equal to or less than a third of its total length.

The operation method subject of this invention therefore requires that the wind turbine has mechanisms for changing, based on the azimuth, the operational characteristics of the profiles situated in the blade tip region in such a way that they produce a lower level of noise. Preferably, these mechanisms can be regulated based on the magnitude of the incident wind.

Amongst the mechanisms that can be used in this regard on the length L section of the blade, the following can be highlighted:
- Mechanisms which allow the angle of attack of said part of the blade to be reduced. The estimated noise reduction for GAMESA G80 machines is around 0.5 db for each degree of the angle of attack that is reduced. That effect is achieved because the thickness of the boundary layer is less when the pressure gradient is less, and a reduction in the angle of attack implies a reduction of the pressure gradient
- Mechanisms which allow the effective chord to be changed such as elements which inflate and disinflate when required, or surface which enter and exit through the trailing edge of the blade. The effect of the chord reduction is rather less than the reduction of the angle of attack as the pressure gradient is the same but it decreases the length upon which the boundary layer has an effect therefore resulting in a lower thickness than the original.
- Mechanisms which allow the profile curvature to be changed such as classic hyper lift devices (flaps) or wings, or flexible elements included on the blades which can be changed by some mechanical, thermal, chemical or electrical procedure.
- Mechanisms which allow the boundary layer to be sucked or blown, such as ridges or holes arranged on the surface of the blade, or micro nano-valve matrices.
- The use of electrorheological materials which change there shape by applying electrical current.

The wind turbine according to this invention may also be used to implement methods which allow the compensation of loads produced in the machine by current non-uniformity, whether this is produced by the presence of obstacles (tower) or by characteristics of the incident wind itself.

To the embodiment described above, the modifications within the scope defined in the following claims may be incorporated.

## Claims

1. Wind turbine (11) which comprises a blade rotor which activates an electric generator and control mechanisms for said rotor, having blades (13) of aerodynamic profile with a leading edge and a trailing edge **characterised in that:**
a) the blades (13) which allow the reduction of lift on a length L, measured from its tip, less than or equal to the radius R of the blade.
b) said control mechanisms allow cyclic activation of the mechanisms for reducing the lift of each blade (13) during its pass through a circular sector S less than or equal to 160° hypothetically located on the rotor plane.

2. Wind turbine (11) in accordance with claim 1, **characterised in that** the length L is less than or equal to 1/3 of the radius R of the blade (13)

3. Wind turbine (11) in accordance with claims 1 or 2, **characterised in that** said mechanisms for lift reduction consist of mechanisms which allow the reduction of the angle of attack.

4. Wind turbine (11) in accordance with claims 1 or 2, **characterised in that** said mechanisms for lift reduction consist of mechanisms which allow the modification of the curvature of the profiles of the blades (13).

5. Wind turbine (11) in accordance with claims 1 or 2, **characterised in that** said mechanisms for lift reduction consist of mechanisms which allow suction or blowing on the boundary layer.

6. Wind turbine (11) in accordance with claims 1 or 2, **characterised in that** said mechanisms for lift reduction consist of mechanisms which allow the modification of the effective chord of the blades (13).

7. Operation method of a wind turbine (11) in accordance with any of claims 1-6 which cyclically activates said mechanisms for lift reduction of each of the blades (13) during their pass through a circular sector delimited on the rotor plane between two hypothetical radii located, following the direction of blade rotation, at 10 and 170° from the hypothetical radius at which a blade (13) reaches maximum height.

8. Operation method of a wind turbine (11) in accordance with claim 7 in which the sector S is equal to or less than 120°.

9. Operation method of a wind turbine (11) in accordance with either of claims 7 or 8 in which the scope of the lift reduction is controlled based on incident wind speed.
